# EUROPEAN PATENT APPLICATION

(11) **EP 4 568 082 A1**
(43) Date of publication of application: **11.06.2025**
(21) Application number: 24161273.8
(22) Date of filing: 04.03.2024
(51) Int. Cl.: H02K 15/02, B32B 37/12, F16B 11/00, H02K 15/12

(54) **GLUE SPREADING BLOCK, DEVICE AND METHOD FOR BONDING MOTOR CORE AND GLUE DOT THEREOF**

(30) Priority: 04.12.2023 CN 202311641842
(71) Applicant: WuXi Vision Tool & Die Co., Ltd., WuXi City 214000 (CN)
(72) Inventor: Qiao, Lei, WuXi City, 214000 (CN)
(74) Representative: Cabinet Chaillot

(57) **Abstract**

Provided are a glue spreading block, device and method for bonding a motor core, and a glue dot thereof. The glue spreading device includes a glue spreading block for bonding the motor core, where a shape of the glue spreading block can be set based on actual needs, and the glue spreading block is configured to spread glue internally absorbed on a silicon steel sheet when the glue spreading block is in contact with the silicon steel sheet. The glue spreading block for bonding the motor core provided in the present invention can spread the glue on the silicon steel sheet by means of printing, which can not only ensure the consistency of a size of glue spots, but also have a long service life, and feature reduced maintenance frequency and simple maintenance, prolonged maintenance cycle and improved production efficiency.

## Description

### TECHNICAL FIELD

The present invention relates to a bonding device for silicon steel sheets of a motor core, and particularly relates to a glue spreading block, device and method for bonding a motor core, and a glue dot thereof.

### BACKGROUND

An electric vehicle is primarily driven by a motor. Therefore, in order to improve the efficiency of a motor core, silicon steel sheets are laminated and bonded with adhesive glue. For example, a glue spraying nozzle for manufacturing a motor core of a new energy vehicle and a glue spraying method therefor, as disclosed in the Chinese Patent CN113441298A, uses the glue spraying nozzle for dotting glue on silicon steel sheets, specifically, the glue spraying nozzle includes a valve dispensing cylinder and a valve core, where the valve dispensing cylinder includes a glue spraying channel, the valve core is arranged inside the glue spraying channel, and a first gap is formed between the valve core and the glue spraying channel; the glue spraying channel includes a conical cavity and a glue inlet channel in communication with the conical cavity, the valve core includes a conical valve core, the conical valve core is arranged inside the conical cavity, a conical surface of the conical valve core is in close contact with an inner wall of the conical cavity, an upper end portion of the conical valve core extends out from an upper end opening of the conical cavity, and an extending height of the upper end portion of the conical valve core is h1; and by moving the conical valve core downwards, a glue spraying cavity is formed between a conical surface of a conical head and the inner wall of the conical cavity in the glue spraying nozzle, where a diameter of the upper end opening of the conical cavity is B1, a diameter of an upper end of the conical head is B2, and a cross-sectional area of a glue spraying opening of the cavity equals to B1-B2. However, because of being used for continuous molds, the device has the following defects: the valve core directly contacts with the silicon steel sheets and is easy to wear, and a jacking height changes after being worn, subsequently affecting a size of the glue spraying cavity and thus the amount of glue spraying, that is, affecting a size of a glue dot, and resulting in poor consistency of the glue spraying; and when the glue dot is relatively large, glue may enter a wire groove when the silicon steel sheets are laminated, which affects the subsequent winding process, requiring cleaning up the glue and leading to a new process. In addition, due to the tolerance of flatness of the silicon steel sheets, it is impossible to ensure that all the valve cores have a consistent jacking height when the glue dots are up to a few dozen, and inconsistent jacking heights will lead to changes in the size of the glue spraying cavity and consequently poor consistency in the size of glue dots. As a result, the valve core has a shorter service life and requires frequent maintenance, which affects the production efficiency.

### SUMMARY

In order to solve the above problems of inconsistent size of the glue dots and frequent maintenance, the present invention provides a glue spreading block, device and method for bonding a motor core, and a glue dot thereof, with a specific technical solution as follows:
a glue spreading block for bonding a motor core, where a shape of the glue spreading block can be set based on actual needs, and the glue spreading block is configured to spread glue internally absorbed on a silicon steel sheet when the glue spreading block is in contact with the silicon steel sheet.

Preferably, a glue spreading head matching a glue dot is arranged at a top of the glue spreading block.

A glue spreading device for bonding a motor core, including the glue spreading block, a fixed base and a cover plate, where the fixed base is mounted on a lower template, and a glue groove for storing glue is formed on the fixed base; the cover plate is mounted on the fixed base and located above the glue groove, a plurality of glue spreading holes are formed on the cover plate, the glue spreading blocks are respectively arranged inside the glue spreading holes, the top of the glue spreading block is not lower than the top of the cover plate, and a bottom of the glue spreading block is located inside the glue groove for absorbing glue; and the glue spreading blocks are configured to spread the glue on the silicon steel sheet.

Preferably, the glue spreading device further includes a glue storage sponge, where the glue storage sponge is mounted inside the glue groove, and the glue spreading blocks are all mounted on the glue storage sponge.

Preferably, the glue spreading device further includes a rebound device, where the rebound device includes a rebound rod and a spring, the rebound rod is movably inserted into a rebound hole on the fixed base and abutted against the bottom of the glue spreading block; and the spring is movably inserted on the rebound rod, and two ends of the spring are respectively abutted against the rebound hole and the rebound rod for jacking the glue spreading blocks.

Preferably, the glue spreading device further includes a wear-resistant sleeve, where the wear-resistant sleeve is movably inserted into the glue spreading hole on the cover plate, a wear-resistant hole is formed on the wear-resistance sleeve, the glue spreading block is movably inserted into the wear-resistant hole, and the top of the glue spreading block is flush with a top of the wear-resistant sleeve, or the top of the glue spreading block is lower than the top of the wear-resistant sleeve.

Preferably, when a silicon steel sheet is pressed towards the top of the glue spreading block, the glue spreading block spreads the glue to the silicon steel sheet to obtain a glue dot.

A glue dot of a glue spreading device for bonding a motor core, where the glue dot is expanded along an original shape after the silicon steel sheets are laminated. Preferably, a shape of the glue dot is obtained through the glue spreading block according to the needs.

Compared with that prior art, the present invention has the following beneficial effects: the glue spreading block for bonding the motor core provided in the present invention can spread the glue on the silicon steel sheet by means of printing, which can not only ensure the consistency of the size of glue spots, but also have a long service life, and feature reduced maintenance frequency and simple maintenance, prolonged maintenance cycle and improved production efficiency.

### BRIEF DESCRIPTION OF THE DRAWINGS

FIG. 1 is a structural schematic diagram of a glue spreading block according to an embodiment of the present invention.
FIG. 2 is a cross-sectional view of a glue spreading method for bonding a motor core according to an embodiment of the present invention.
FIG. 3 is a partial enlarged view of FIG. 2.
FIG. 4 is a top view of a glue spreading method for bonding a motor core according to an embodiment of the present invention.
FIG. 5 is a structural schematic diagram of a fixed base according to an embodiment of the present invention.
FIG. 6 is a cross-sectional view of a fixed base according to an embodiment of the present invention.
FIG. 7 is a schematic diagram for assembly of a glue spreading block and a glue storage sponge according to an embodiment of the present invention.
FIG. 8 is a cross-sectional view of FIG. 7.
FIG. 9 is a front view of a cover plate according to an embodiment of the present invention.
FIG. 10 is a side view of a cover plate according to an embodiment of the present invention.
FIG. 11 is a cross-sectional view of a wear-resistant sleeve according to an embodiment of the present invention.
FIG. 12 shows shapes of glue dots after silicon steel sheets are laminated according to an embodiment of the present invention.

### DETAILED DESCRIPTION OF EMBODIMENTS

The present invention will be further described below in combination with the accompanying drawings.

### Embodiment 1

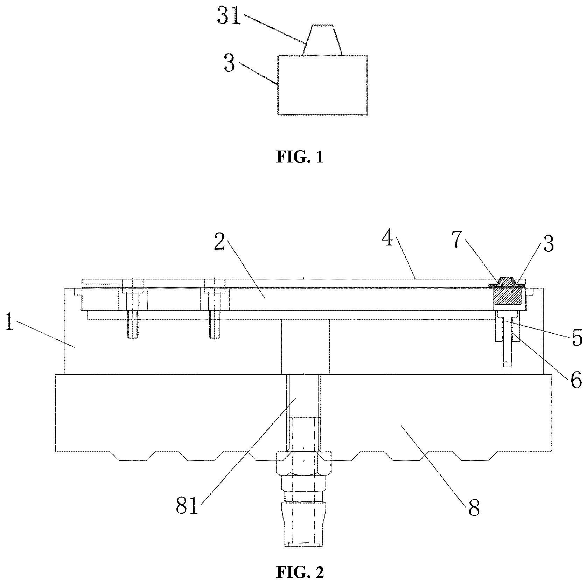

As shown in FIG. 1, a glue spreading block for bonding a motor core, where a shape of the glue spreading block 3 can be set based on actual needs, and the glue spreading block 3 is configured to spread glue internally absorbed on a silicon steel sheet when the glue spreading block is in contact with the silicon steel sheet.

A glue spreading head 31 matching size and shape of glue dots is arranged at a top of the glue spreading block 3, and a size and a shape of the glue spreading head 31 can be set according to actual size and shape of a product.

The glue spreading head 31 and the glue spreading block 3 form a staircase structure, which not only facilitates installation, but also enables the glue spreading block 3 to absorb sufficient glue, thereby ensuring that the amount of glue for each glue spreading is the same or close and reducing errors.

The glue spreading block can be made of materials such as sponge.

### Embodiment 2

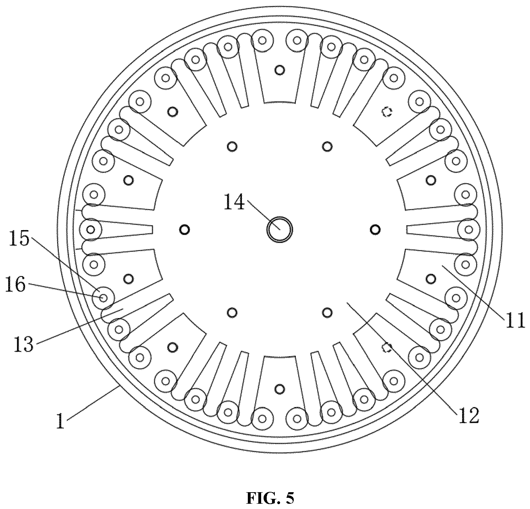

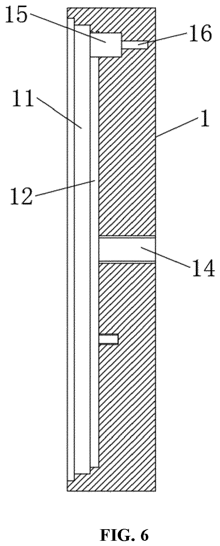

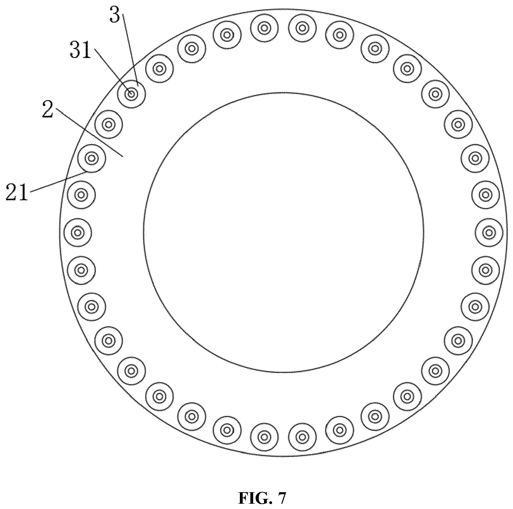

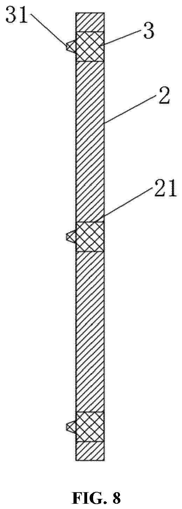

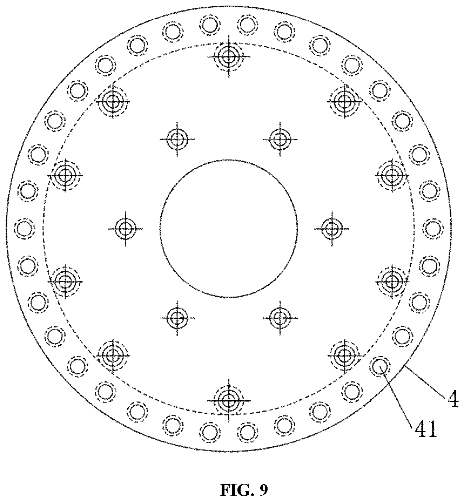

As shown in FIGs. 1-10, a glue spreading device for bonding a motor core, including the glue spreading block 3, a fixed base 1 and a cover plate 4. The fixed base 1 is mounted on a lower template 8, and a glue groove 12 for storing glue is formed on the top of the fixed base 1; the cover plate 4 is mounted on the fixed base 1 and located above the glue groove 12, and a plurality of glue spreading holes 41 are formed on the cover plate 4; a plurality of the glue spreading blocks 3 are respectively arranged inside the glue spreading holes 41, the top of the glue spreading block 3 is not lower than the top of the cover plate 4, and a bottom of the glue spreading block 3 is located inside the glue groove 12 for absorbing glue; and the glue spreading block 3 is configured to spread the glue on the silicon steel sheet when the glue spreading block is in contact with the silicon steel sheet.

Specifically, mounting grooves 11, a glue groove 12 and glue feeding grooves 13 are formed on the top of the fixed base 1, where the glue groove 12 and the glue feeding grooves 13 are both located at a bottom of the mounting grooves 11, and the glue groove 12 is in communication with the glue feeding grooves 13. A glue inlet hole 14 is formed in the center of the glue groove 12. The fixed base 1 is mounted on the lower template 8, a glue feeding hole 81 is formed on the lower template 8, the glue feeding hole 81 is in communication with a glue inlet hole 14, and the glue feeding hole 81 is connected with a glue feeding device.

A connecting column 42 is arranged at a bottom of the cover plate 4, the connecting column 42 is connected to a bottom of the glue groove 12 to ensure a height position of the cover plate 4, the cover plate 4 is located above a glue storage sponge 2, a plurality of the glue spreading holes 41 are formed on the cover plate 4, and the glue spreading head 31 is movably inserted into the glue dotting holes 41 and corresponds to the glue dotting holes 41 one by one. The top of the glue spreading block 3 is not lower than the top of the cover plate 4 to ensure that the glue spreading blocks 3 are in contact with the silicon steel sheet.

When the glue is dotted, the silicon steel sheet moves above the cover plate 4, and a center of the silicon steel sheet coincides with a center of the fixed base 1; when the silicon steel sheet is pressed onto the cover plate 4 by an upper mold, the silicon steel sheet is in contact with the top surface of glue spreading head 31, and the glue sticks to the silicon steel sheet; and when the upper mold is raised, the silicon steel sheet is separated from the glue spreading head 31, the glue sticks to the silicon steel sheet, the glue dots with desired diameter are obtained on the silicon steel sheet, and the silicon steel sheet is then laminated.

Even if the glue spreading head 31 is worn, the diameter of the glue spreading head 31 changes little, which has a far smaller impact than that of the change of the glue spraying cavity, that is, the diameter of the glue spreading head 31 changes relatively little, that is, the diameter of the glue dots formed change relatively little, and the glue dots are of good consistency. Since the sponge has a certain elasticity and can be compressed, and a slight compression has little impact on the diameter of the glue spreading head 31, a slight deformation has little impact on the change in the diameter of the glue dots, which can be ignored and solves the problem of the change in the size of the glue dots caused by the tolerance of flatness of the silicon steel sheet in the prior art. Since the glue spreading head 31 ensures the consistency of the glue dots, the frequency of maintenance is reduced, the maintenance period is extended and the production efficiency is improved.

### Embodiment 3

As shown in FIGs. 2-10, based on the above Embodiment 2, the glue spreading device further includes a glue storage sponge 2, where the glue storage sponge 2 is a nano-sponge, the glue spreading block 3 can also be a nano-sponge, the glue storage sponge 2 is annular, and a plurality of sponge holes 21 are formed on the glue storage sponge; the glue spreading block 3 is mounted inside the sponge hole 21, a glue spreading head 31 is arranged at the top of the glue spreading block 3, the glue spreading head 31 is of a truncated cone shape, and the top of the glue spreading head 31 matches a size of the glue dot, the truncated cone shape can increase the strength of the glue spreading head 31 and maintain a certain supporting force, such that when a silicon steel sheet is pressed onto the glue spreading head 31, it can ensure that a top surface of the glue spreading head 31 is in complete contact with the silicon steel sheet and ensure the integrity of glue dots. The glue storage sponge 2 is mounted inside the mounting groove 11 of the fixed base 1, and is located above the glue groove 12 and the glue feeding groove 13, and the glue storage sponge 2 is configured to store glue and feed the glue to the glue feeding groove 3, such that the so that the glue feeding groove 3 can continuously dot the glue, and continuous supply of the glue is realized. The glue groove 12 and the glue feeding groove 13 are used for the flow of glue, the glue feeding groove 13 is also located below the glue spreading block 3, the glue feeding groove 13 facilitates the feeding of glue to the lower part of the glue spreading block 3, such that the glue spreading block 3 can also directly absorb glue, thereby ensuring the amount of glue at each glue dot, improving the consistency of the glue dots, and guaranteeing continuous and reliable feeding of glue. The number of the glue spreading blocks 3 is consistent with the number of glue dots on the silicon steel sheet, and corresponds one to one.

### Embodiment 4

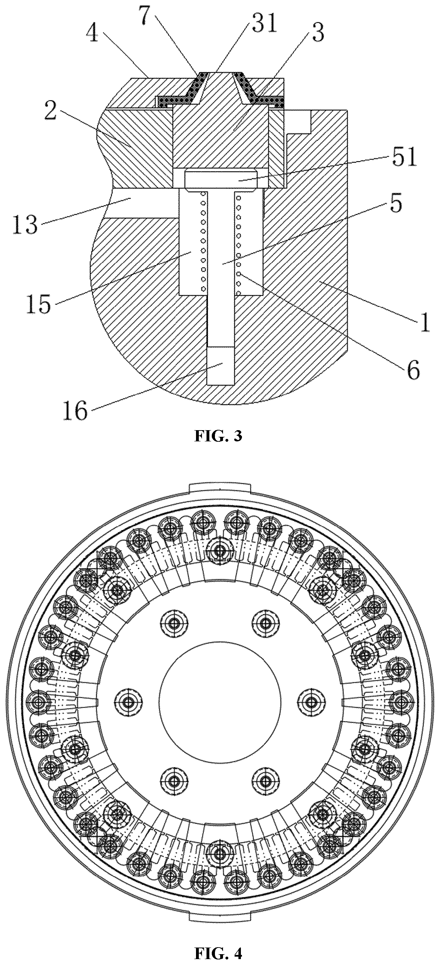

As shown in FIGs. 2 and 3, based on the above Embodiments 2 and 3, the glue spreading device further includes a rebound device, where the rebound device includes a rebound rod 5 and a spring 6.

A plurality of rebound holes 15 are annularly formed at the bottom of the mounting groove 11, the rebound holes 15 is in communication with the glue feeding grooves 13, a guide hole 16 is formed at the bottom of the rebound holes 15, and the rebound holes 15 and the guide hole 16 form a stepped hole. A rebound seat 51 is arranged at the top of the rebound rod 5, a diameter of the rebound seat 51 is greater than that of the rebound rod 5 but less than that of the glue spreading block 3, the rebound rod 5 is movably inserted into the guide hole 16, the rebound seat 51 is movably inserted into the rebound hole 15, the spring 6 is movably inserted on the rebound rod 5, and two ends of the spring 6 are respectively abutted against the bottom of the rebound hole 15 and the bottom of the rebound seat 51. The spring 6 is configured to push the rebound seat 51 to abut against the glue spreading block 3, such that the glue spreading block 3 moves towards the cover plate 4.

The rebound of the sponge has a certain lifespan, the rebound performance is weakened when the glue spreading head 31 is compressed a certain number of times, and it is easy for the top surface of the glue spreading head 31 to be lower than a top surface of the cover plate 4, resulting in failure of the glue spreading head 31 to contact with the silicon steel sheet, and subsequently leading to failure of glue dotting. Therefore, the rebound device can make the top of the glue spreading head 31 is always higher than the top surface of the cover plate 4 to ensure normal glue dotting. The glue spreading block 3 needs to be replaced when the glue spreading head 31 is compressed to a certain height to ensure the quality of the glue dots.

### Embodiment 5

As shown in FIGs. 1-11, based on any one of the above Embodiments 2-4, the glue spreading device further includes a wear-resistant sleeve 7, where the wear-resistant sleeve 7 is movably inserted into the glue dotting hole 41 on the cover plate 4, a wear-resistant hole 71 is formed on the wear-resistance sleeve 7, the wear-resistant hole 71 is tapered, the glue spreading block 3 is movably inserted into the wear-resistant hole 71, the top of the glue spreading block 3 is flush with a top of the wear-resistant sleeve 7, or the top of the glue spreading block 3 is located below the top of the wear-resistant sleeve 7, and a distance from the top of the wear-resistant sleeve 7 is not greater than 0.2 mm. The wear-resistant sleeve 7 is capable of preventing the glue spreading head 31 from contacting with the silicon steel sheet when the silicon steel sheet moves, such that the wear of the glue spreading head 31 is reduced and the service life of the glue spreading head 31 is prolonged.

When the glue is dotted, the wear-resistance sleeve 7 will follow the glue spreading head 31 to move towards the fixed base 1, that is, the wear-resistant sleeve 7 has a certain lifting space, without affecting the glue dotting of the glue spreading head 31.

### Embodiment 6

A glue spreading method for bonding a motor core, where when a silicon steel sheet is pressed towards the top of the glue spreading block 3, the glue spreading block 3 spreads the glue to the silicon steel sheet to obtain a glue dot.

The glue spreading method uses a glue spreading device for bonding a motor core to dot the glue.

### Embodiment 7

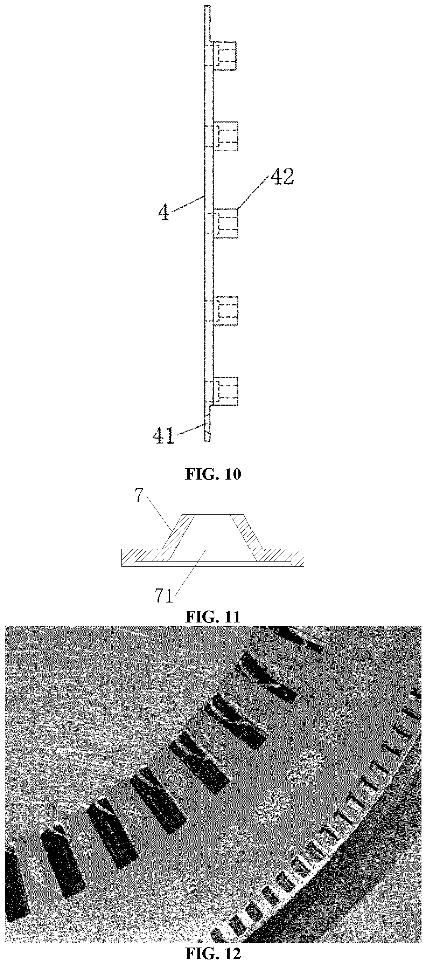

As shown in FIG. 12, a glue dot of a glue spreading device for bonding a motor core, the glue dot is expanded along an original shape after the silicon steel sheets are laminated, and a shape of the glue dot is obtained through the glue spreading block 3 according to the needs.

The technical principle of the present invention is described above in combination with specific embodiments. This description is only for the purpose of illustrating the principle of the present invention and is not to be construed in any way as limiting the protection scope of the present invention. On the basis of explanations herein, those skilled in the art can devise other specific implementations of the present invention without inventive efforts, which fall within the protection scope of the claims of the present invention.

## Claims

1. A glue spreading block for bonding a motor core, **characterized in that** a shape of the glue spreading block (3) can be set based on actual needs, and the glue spreading block (3) is configured to spread glue internally absorbed on a silicon steel sheet when the glue spreading block is in contact with the silicon steel sheet.

2. The glue spreading block for bonding the motor core according to claim 1, **characterized in that** a glue spreading head (31) matching a glue dot is arranged at a top of the glue spreading block (3).

3. A glue spreading device for bonding a motor core, **characterized by** comprising:
a plurality of the glue spreading blocks (3) according to claim 1;
a fixed base (1), **characterized in that** the fixed base (1) is mounted on a lower template (8), and a glue groove (12) for storing glue is formed on a top of the fixed base (1); and
a cover plate (4), **characterized in that** the cover plate (4) is mounted on the fixed base (1) and located above the glue groove (12), and a plurality of glue spreading holes (41) are formed on the cover plate (4); and the plurality of glue spreading blocks (3) are respectively arranged inside the glue spreading holes (41), the top of the glue spreading block (3) is not lower than a top of the cover plate (4), and a bottom of the glue spreading block (3) is located inside the glue groove (12) for absorbing glue;
**characterized in that**
the glue spreading block (3) is configured to spread the glue on the silicon steel sheet when the glue spreading block is in contact with the silicon steel sheet.

4. The glue spreading device for bonding the motor core according to claim 3, further **characterized by** comprising a glue storage sponge (2), **characterized in that** the glue storage sponge (2) is mounted inside the glue groove (12), and the glue spreading blocks (3) are all mounted on the glue storage sponge (2).

5. The glue spreading device for bonding the motor core according to claim 3, further **characterized by** comprising a rebound device, **characterized in that** the rebound device comprises:
a rebound rod (5), **characterized in that** the rebound rod (5) is movably inserted into a rebound hole (15) on the fixed base (1) and abutted against the bottom of the glue spreading block (3); and
a spring (6), **characterized in that** the spring (6) is movably inserted on the rebound rod (5), and two ends of the spring (6) are respectively abutted against the rebound hole (15) and the rebound rod (5) for jacking the glue spreading blocks (3).

6. The glue spreading device for bonding the motor core according to claim 3, further **characterized by** comprising a wear-resistant sleeve (7), where the wear-resistant sleeve (7) is movably inserted into the glue spreading hole (41) on the cover plate (4), a wear-resistant hole (71) is formed on the wear-resistance sleeve (7), the glue spreading block (3) is movably inserted into the wear-resistant hole (71), and the top of the glue spreading block (3) is flush with a top of the wear-resistant sleeve (7), or the top of the glue spreading block (3) is lower than the top of the wear-resistant sleeve (7).

7. A glue spreading method for the glue spreading device for bonding the motor core according to claim 3, **characterized in that** when a silicon steel sheet is pressed towards the top of the glue spreading block (3), the glue spreading block (3) spreads the glue onto the silicon steel sheet to obtain a glue dot.

8. A glue dot of the glue spreading device for bonding the motor core according to claim 1, **characterized in that** the glue dot is expanded along an original shape after the silicon steel sheets are laminated.

9. The glue dot according to claim 8, **characterized in that** a shape of the glue dot is obtained through the glue spreading block (3) according to the needs.
